(19) **Europäisches Patentamt**
**European Patent Office**
**Office européen des brevets**

(11) **EP 1 784 037 A1**

(12) **EUROPEAN PATENT APPLICATION**
published in accordance with Art. 158(3) EPC

(43) Date of publication:
**09.05.2007 Bulletin 2007/19**

(51) Int Cl.:
***H04Q 7/38*** *(2006.01)*

(21) Application number: **05770818.2**

(86) International application number:
**PCT/JP2005/014736**

(22) Date of filing: **11.08.2005**

(87) International publication number:
**WO 2006/016645 (16.02.2006 Gazette 2006/07)**

(84) Designated Contracting States:
**DE GB**

(30) Priority: **11.08.2004 JP 2004234883**

(71) Applicant: **NTT DoCoMo, Inc.**
**Tokyo 100-6150 (JP)**

(72) Inventors:
  • **USUDA, Masafumi**
  **NTT DoCoMo Inc.**
  **Intellectual Property Dept.**
  **Chiyoda-ku, Tokyo 100-6150 (JP)**

• **UMESH, Anil**
**NTT DoCoMo Inc.**
**Intellectual Property Dept.**
**Chiyoda-ku, Tokyo 100-6150 (JP)**
• **NAKAMURA, Takehiro**
**NTT DoCoMo Inc.**
**Intellectual Property Dept.**
**Chiyoda-ku, Tokyo 100-6150 (JP)**

(74) Representative: **HOFFMANN EITLE**
**Patent- und Rechtsanwälte**
**Arabellastrasse 4**
**81925 München (DE)**

(54) **MOBILE STATION AND MOBILE COMMUNICATION SYSTEM**

(57) The present invention relates to a mobile station that controls a transmission rate of user data to be transmitted to a base station. The mobile station according to the present invention includes: a transmission rate control unit configured to decide an instantaneous transmission rate of the user data, based on a parameter notified from a network during establishment of a call, a radio propagation path quality of a radio propagation path between the mobile station and the base station, an average radio propagation path quality of the radio propagation path, and a factor related to a transmission rate, a transmission power or a transmission power ratio notified from the base station.

## FIG. 12

## Description

<TECHNICAL FIELD>

The present invention relates to a mobile station and a mobile communication system, which enhance communication performance (communication capacity, communication quality, and the like) of the mobile communication system.

In particular, the present invention relates to a mobile station and a mobile communication system, which are adaptable to the W-CDMA and CDMA2000 systems as third-generation communication systems.

<BACKGROUND ART>

In a conventional mobile communication system, in the case of setting a dedicated channel, a radio control apparatus decides a transmission rate of user data in an uplink in consideration for a hardware resource for reception (hereinafter, a hardware resource) in a base station, a radio resource (an uplink interference amount) in the uplink, a transmission power of a mobile station, a transmission processing performance of the mobile station, a transmission rate required by an upper-level application, and the like, and notifies the transmission rate as a message of the Layer 3 (Radio Resource Control layer) individually to the mobile station and the base station.

Here, the radio control apparatus is an apparatus that is present in an upper level of the base station and controls the base station and the mobile station.

Meanwhile, as compared with a voice communication and a TV communication, in a data communication, traffic occurs frequently in a bursting manner.

Originally, it is desirable that it be possible to change, at a high speed, the transmission rate of the user data in the uplink.

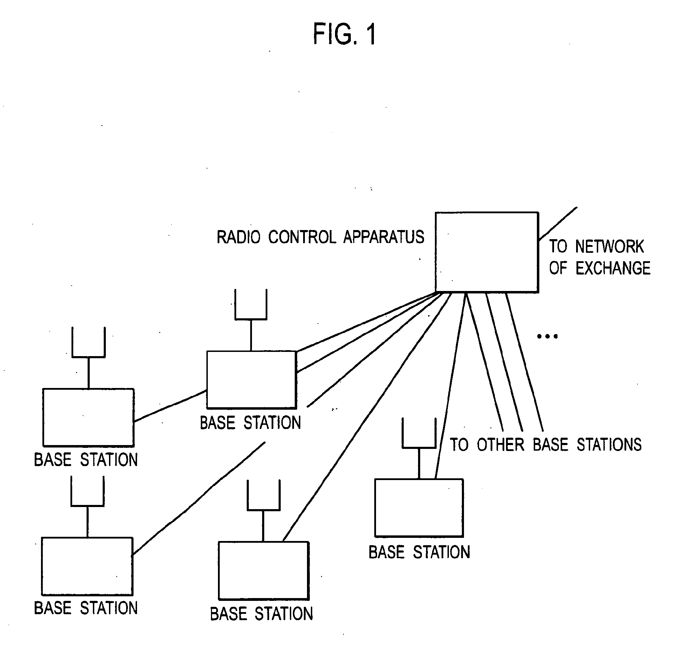

However, as shown in FIG. 1, in the conventional mobile communication system, the radio control apparatus usually performs a centralized control for many base stations.

Accordingly, since it is supposed that a processing load and a processing delay are increased, there has been a problem that it is difficult to change the transmission rate of the user data in the uplink at a high speed (for example, at approximately 1 to 100 ms).

Alternatively, in the conventional mobile communication system, even if the transmission rate of the user data in the uplink can be changed at such a high speed, there has been a problem that implementation cost of the apparatus and operation cost of a network are increased to a large extent.

Hence, in the conventional mobile communication system, it has been usual that the transmission rate of the user data in the uplink is changed in order of several hundred milliseconds to several seconds.

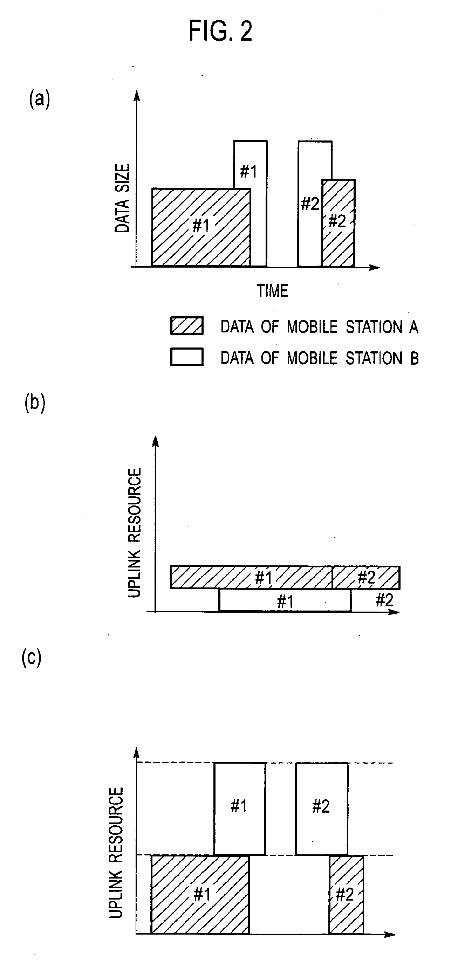

In the conventional mobile communication system, in the case of transmitting the user data that occurs in a bursting manner (refer to FIG. 2(a)), as shown in FIG. 2(b), the user data has been transmitted while permitting long latency and low transmission efficiency.

Alternatively, as shown in FIG. 2(c), the hardware resource has been ensured so as to make it possible to perform high-speed transmission, and the user data has been transmitted while permitting waste of the radio resource in an open time and the hardware resource in the base station.

Here, an "uplink resource" shown on axes of ordinates of FIGS. 2(b) and 2(c) indicates both of the radio resource and the hardware resource, which are described above.

In this connection, in order to effectively utilize the uplink resource, a high-speed control method for the uplink resource in the Layer 1 and the MAC sublayer between the base station and the mobile station has been studied in the "3GPP" and the "3GPP2", which are the international standardization organizations of the third-generation mobile communication system.

Hereinafter, the study for the above-described high-speed control method for the uplink resource is expressed as "Uplink Enhancement".

Here, the control method for the uplink resource, which has been studied in the "Uplink Enhancement", is broadly classified as below into three categories.

As a first control method for the uplink resource, "Time & Rate Control" is known.

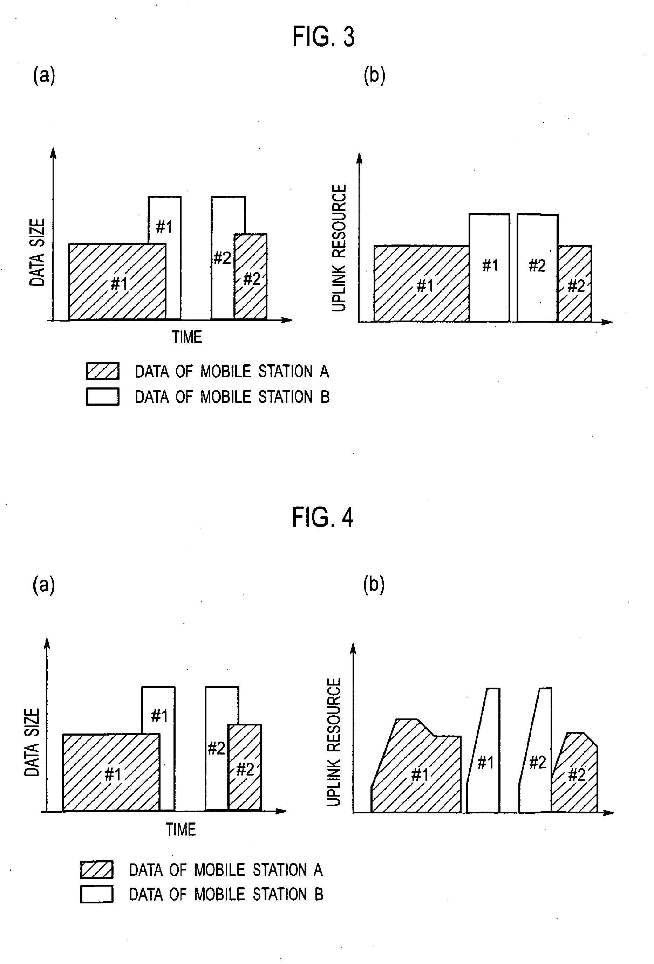

As shown in FIGS. 3(a) and 3(b), in the "Time & Rate Control", at each timing, the base station decides the mobile station that transmits the user data to the base station and the transmission rate of the user data, and notifies an allowable value of the transmission rate).

The designated mobile station transmits the user data to the base station within a range of the decided timing and allowable value of the transmission rate.

As a second control method for the uplink resource, "Rate Control per UE" is known.

As shown in FIGS. 4 (a) and 4 (b), in the "Rate Control per UE", the mobile station can transmit the user data to be transmitted if the mobile station has the user data.

Meanwhile, the allowable e value of the transmission rate (an allowable transmission rate) of the user data is decided and notified by the base station at each transmission time interval (TTI) of one or a plurality of the user data.

In such a case, the base station usually notifies the allowable transmission rate at the current timing or a relative value (for example, a binary value of UP/DOWN) with respect to the allowable transmission rate.

Note that, in such a case, the base station may be configured to designate the allowable transmission rate inherent in every mobile station, or may be configured to designate the same allowable transmission rate in the entire cell.

Moreover, the base station may be configured to appropriately make a selection between the designation of the allowable transmission rate inherent in every mobile station and the designation of the same allowable transmission rate in the entire cell.

As a third control method for the uplink resource, "Rate Control per Cell" is known.

In the "Rate Control per Cell", the base station notifies a common transmission rate for the mobile station under communication or information necessary to calculate the common transmission rate, and decides the transmission rate based on the information received by each mobile station.

The "Time & Rate Control" and the "Rate Control per UE" can ideally be the best control methods for improving an uplink network capacity.

However, it is necessary to allocate the uplink resource after grasping a size of data remaining in a buffer of the mobile station, a transmission power, and the like, and accordingly, there has been a problem that a load of the control by the base station is increased.

Moreover, in the "Time & Rate Control" and the "Rate Control per UE", there has been a problem that an overhead caused by transfer of a control signal is large.

As opposed to this, the "Rate Control per Cell" has an advantage in that the load of the control by the base station is small since the information common in the cell is notified, and each mobile station individually obtains the transmission rate based on the received information.

Furthermore, there has been proposed a method for improving the uplink network capacity by using a radio quality (propagation path information) of each mobile station.

However, in the case of performing the transmission rate control using the radio quality as described above, though it is necessary to adjust a trade-off between fairness and a throughput of the entire cell, a problem of a lack of flexibility has arisen that, when means for realizing the "Rate Control per Cell" is built in the mobile station, the above-described adjustment of the trade-off becomes impossible thereafter.

<DISCLOSURE OF THE INVENTION>

In this connection, the present invention has been made in consideration for the above-described points. It is an object of the present invention to provide flexible mobile communication system and mobile station, which are capable of adjusting the trade-off between the fairness and the throughput of the entire cell by notifying parameters during establishment of a call, and so on.

A first aspect of the present invention is summarized as a mobile station that controls a transmission rate of user data to be transmitted to a base station, including: a transmission rate control unit configured to decide an instantaneous transmission rate of the user data, based on a parameter notified from a network during establishment of a call, a radio propagation path quality of a radio propagation path between the mobile station and the base station, an average radio propagation path quality of the radio propagation path, and a factor related to a transmission rate, a transmission power or a transmission power ratio notified from the base station.

A second aspect of the present invention is summarized as a mobile communication system that controls a transmission rate of user data to be transmitted from a mobile station to a base station, wherein the mobile station is configured to decide an instantaneous transmission rate of the user data, based on a parameter notified from a network during establishment of a call, a radio propagation path quality of a radio propagation path between the base station and the mobile station, an average radio propagation path quality of the radio propagation path, and a factor related to a transmission rate, a transmission power or a transmission power ratio notified from the base station,

BRIEF DESCRIPTION OF THE DRAWINGS

FIG. 1 is a view showing the entire configuration of a general mobile communication system.
FIGS. 2 (a) to 2 (c) are views for explaining a transmission rate control method of an uplink in a mobile communication system according to the conventional technology.
FIGS. 3(a) and 3(b) are views for explaining a transmission rate control method of the uplink in the mobile communication system according to the conventional technology.
FIGS. 4(a) and 4(b) are views for explaining a transmission rate control method of the uplink in the mobile communication system according to the conventional technology.
FIG. 5 is a view showing the entire construction of a mobile communication system according to a first embodiment of the present invention.
FIG. 6 is a view showing the entire configuration of the mobile communication system according to the first embodiment of the present invention.
FIG. 7 is a view for explaining a frame format of a dedicated physical channel for use in a mobile communication system according to an embodiment of the present invention.
FIG. 8 is a functional block diagram of a radio communication function unit of a mobile station according to the embodiment of the present invention.
FIG. 9 is a functional block diagram of a baseband signal processing unit in the radio communication function unit of the mobile station according to the embodiment of the present invention.
FIG. 10 is a view for explaining a function of the baseband signal processing unit in the mobile station according to the embodiment of the present invention.

FIG. 11 is a view showing an example of an operation of 4-channel stop-and-wait protocol, which is performed in a MAC-e function unit in the mobile station according to the embodiment of the present invention.

FIG. 12 is a view showing a state of changing a factor related to a transmission rate in response to an uplink interference amount in a base station according to the embodiment of the present invention.

Fig. 13 is a view for explaining a function of a Layer 1 function unit in the mobile station according to the embodiment of the present invention.

<BEST MODE FOR CARRYING OUT THE INVENTION>

(Construction of Mobile Communication System According to First Embodiment of Present Invention)

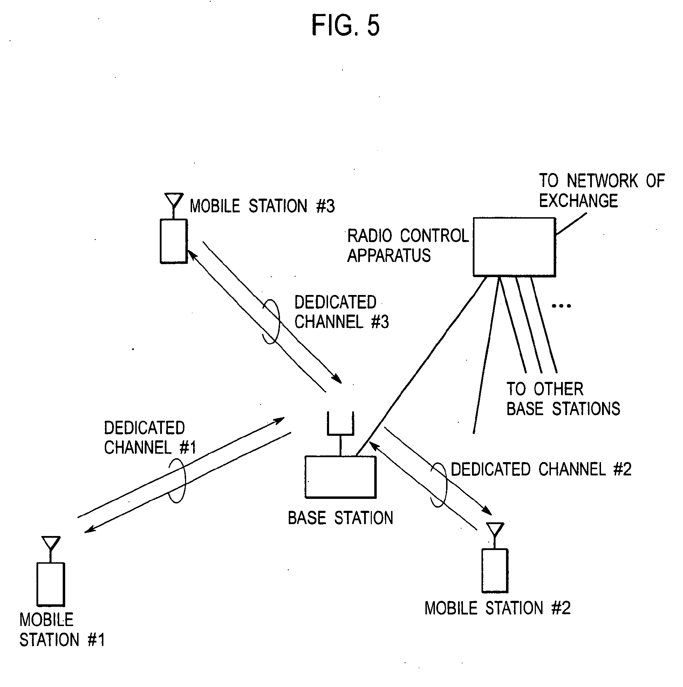

A description will be made of a construction of a mobile communication system according to a first embodiment of the present invention with reference to FIGS. 5 to 13.

The mobile communication system according to this embodiment is designed for the purpose of enhancing communication performance such as a communication capacity and communication quality.

Moreover, the mobile communication system according to this embodiment is adaptable to the "W-CDMA" and the "CDMA2000", which are third-generation mobile communication systems.

As shown in FIG. 5, the mobile communication system according to this embodiment is composed of an exchange, a radio control apparatus, a base station, and mobile stations. Here, by using dedicated channels set for each of the mobile stations #1 to #3, the respective mobile stations transmit and receive user data to be transmitted.

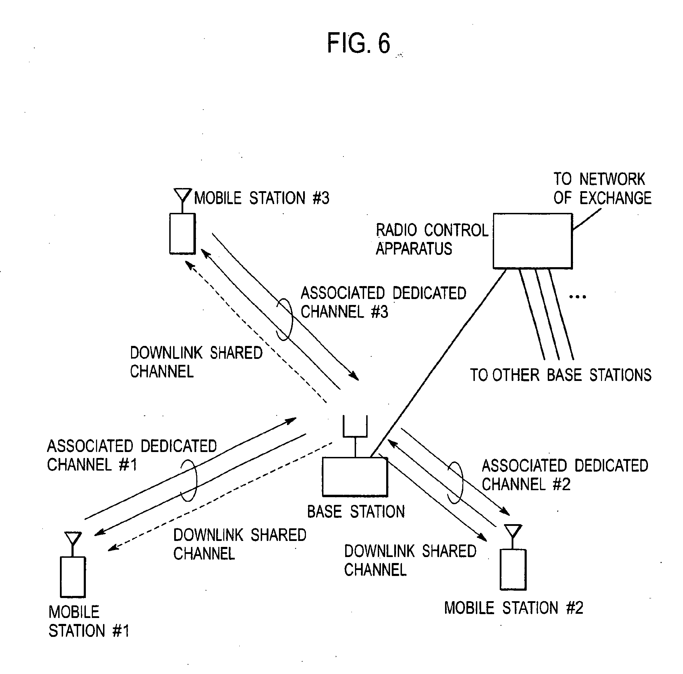

Moreover, in this embodiment, as shown in FIG. 6, the respective mobile stations #1 to #3 may be configured to use a high-speed shared channel (HS-DSCH in 3GPP) in a downlink.

In such a case, user data in the downlink is transmitted by mainly using the downlink shared channel.

Meanwhile, associated dedicated channels are two-way channels allocated individually to the respective mobile stations that make communications by using the downlink shared channel.

Uplink associated dedicated channels transmit pilot symbols, transmission power control commands for downlink associated dedicated channels, downlink quality information for use in scheduling or adaptive modulation and coding of the shared channel, and the like, as well as the user data.

Downlink associated dedicated channels transmit transmission power control commands for the uplink associated dedicated channels.

In FIG. 6, it is assumed that the downlink shared channel is allocated to the mobile station #2 at this point of time.

Note that, though the present invention is applied to the mobile communication system shown in FIGS. 5 and 6, the present invention is also applicable to another mobile communication system as long as the user data is transmitted in the uplink.

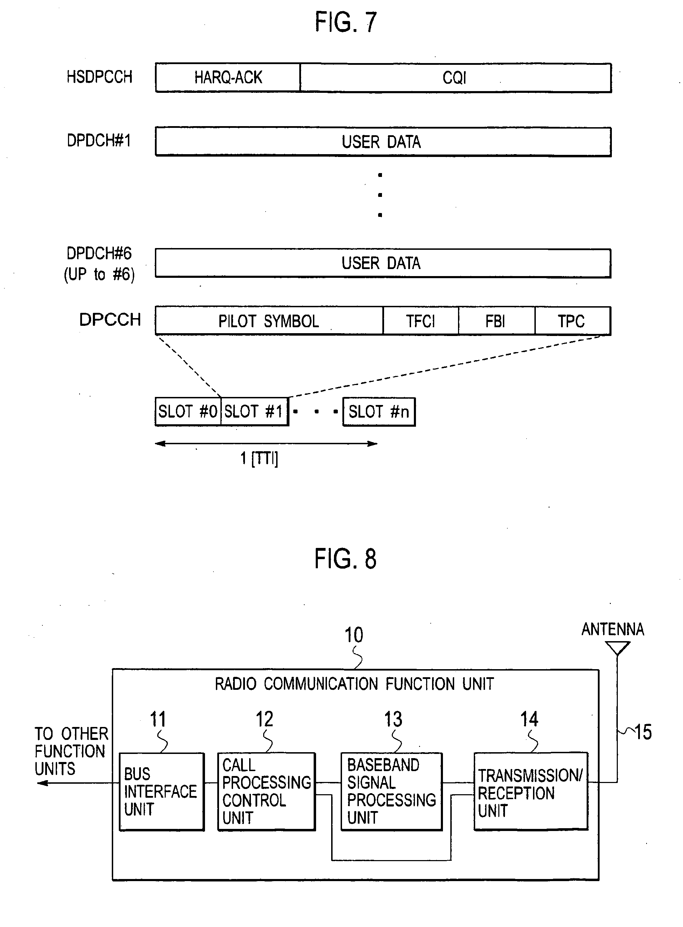

FIG. 7 shows a frame format of each of the uplink associated dedicated channels (dedicated physical channels) in the mobile communication system according to this embodiment.

As shown in FIG. 7, the dedicated physical channel is formed to be transmitted in a unit of a predetermined TTI or in a unit of a TTI set by the Layer 3.

The dedicated physical channel is formed to include the dedicated physical data channels (DPDCHs), a dedicated physical control channel (DPCCH), and a dedicated physical control channel for the HSDPA (HS-DPCCH) in a time unit called a slot.

Note that such a DPDCH as described above for the Uplink Enhancement is sometimes represented also as an "E-DPDCH". Moreover, the DPCCH for the Uplink Enhancement is sometimes represented also as an "E-DPCCH".

Specifically, the DPDCH, the DPCCH, and the HS-DPCCH are modulated by BPSK, classified by diffusion code and phase, and then are multiplexed and transmitted in the above-described manner.

However, with regard to the DPDCH, a spreading factor (spreading coefficient) thereof is the lowest value (for example, 4), and when the number of bits necessary to transmit the user data is insufficient, it is possible to add 1 to 5 DPDCHs.

With regard to the DPDCH, the spreading factor and number of spreading codes thereof are dynamically changed depending on a transport block size.

Specifically, the DPDCH is formed to reduce the spreading factor when the transport block size is large, and to perform multi-coding when the number of bits necessary to transmit the user data is insufficient.

Note that, in usual, the number of slots for each TTI is set to be the optimum for the mobile communication system and an application.

FIG. 8 shows a schematic configuration example of a radio communication function unit 10 of the mobile station according to this embodiment.

As shown in FIG. 4, the radio communication function unit 10 of the mobile station includes a bus interface unit 11, a call processing control unit 12, a baseband signal processing unit 13, a transmission/reception unit 14, and an antenna 15. Moreover, the radio communication function unit 10 may be configured to further include an amplifier unit (not shown).

However, these configurations do not necessarily exist independently as hardwares. Specifically, the respective configurations may be integrated, or may be composed of software processes.

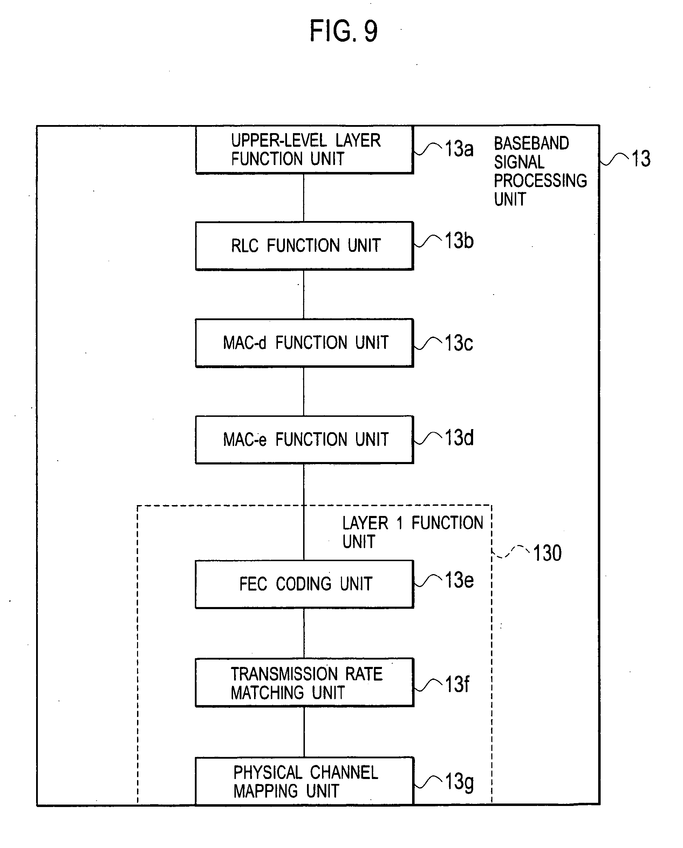

FIG. 9 shows functional blocks of the baseband signal processing unit 13. As shown in FIG. 9, the baseband signal processing unit 13 includes an upper-level layer function unit 13a, an RLC function unit 13b that functions as an RLC sublayer, a MAC-d function unit 13c, a MAC-e function unit 13d, and a Layer 1 function unit 130 that functions as the Layer 1.

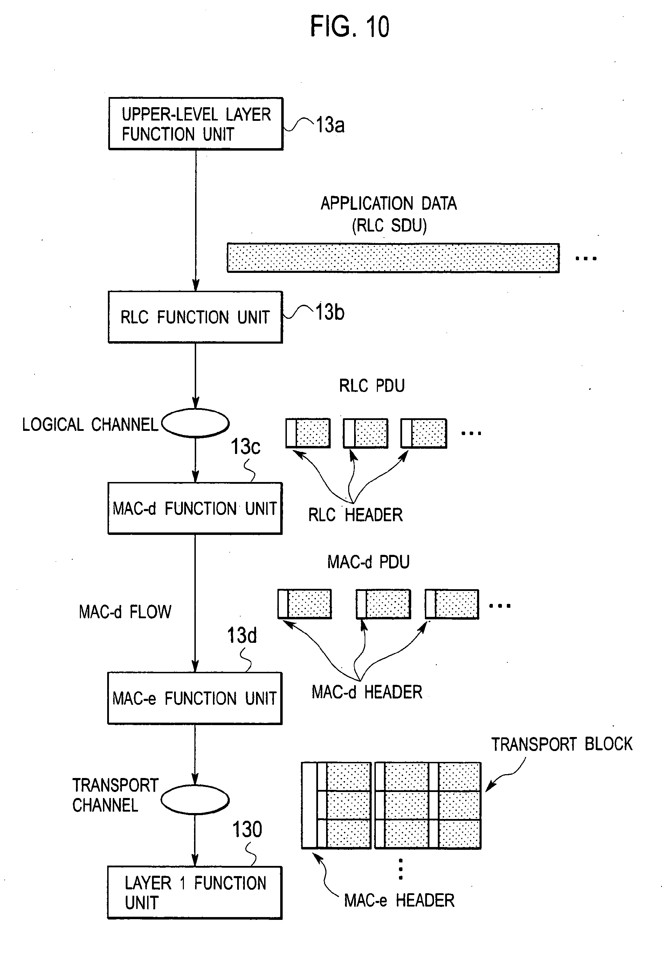

As shown in FIG. 10, the RLC function unit 13b is configured to divide application data (RLC-SDU) received from the upper-level layer function unit 13a into PDUs with a predetermined size, to create RLC PDUs by adding, to the divided PDUs, RLC headers for use in sequence arrangement processing, retransmission processing, and the like, and to hand the RLC PDUs to the MAC-d function unit 13c.

Here, a pipe that functions as a bridge between the RLC function unit 13b and the MAC-d function unit 13c is defined as a "logical channel". The logical channel is classified depending on contents of the data to be transmitted/received.

In the case of performing the communication, it is possible to provide a plurality of the logical channels in one connection. Specifically, data of plural contents (for example, control data, user data, and the like) can be transmitted/received in a logically parallel manner.

The MAC-d function unit 13c is configured to multiplex the logical channels, and to add MAC-d headers accompanying such multiplexing to the RLC PDUs, thereby creating MAC-d PDUs.

Moreover, the MAC-d function unit 13c is configured to perform priority control processing, transmission power measuring processing, processing for controlling the transmission rate so that the transmission power cannot exceed the allowable value of the mobile station, and the like.

The MAC-e function unit 13d is configured to collectively add a MAC-e header to a plurality of the MAC-d PDUs received from the MAC-d function unit 13c, thereby to create a transport block, and to hand the transport block to the Layer 1 function unit 130 through a transport channel.

Moreover, the MAC-e function unit 13d is configured to function as a lower-level layer of the MAC-d function unit 13c and to perform a retransmission control function by a hybrid ARQ (HARQ) and a transmission rate control function.

By N-channel stop-and-wait (N-SAW) protocol, such a retransmission control function by the HARQ performs the retransmission control processing, based on feedback of Ack/Nack in the uplink.

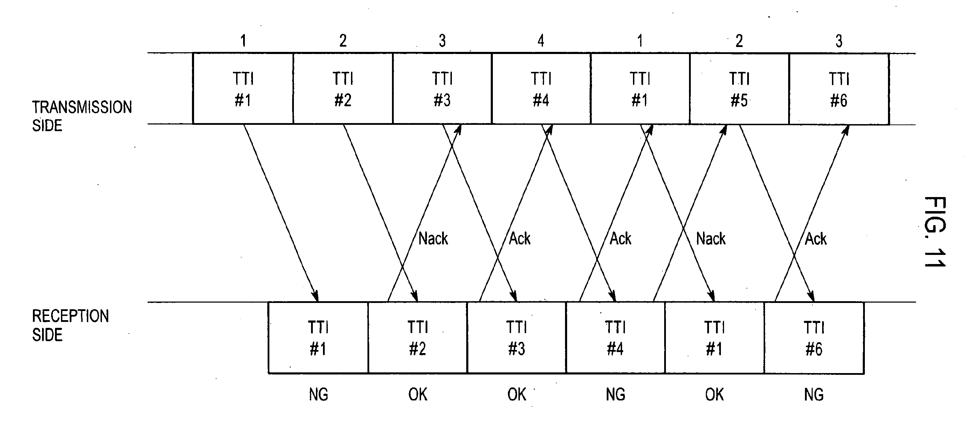

FIG. 11 shows an operation example of the 4-channel stop-and-wait protocol.

The transmission rate control function is configured to decide an instantaneous transmission rate of the user data, based on parameters notified from a network during establishment of the call, a radio propagation path quality, an average radio propagation path quality, and a factor related to a transmission rate, a transmission power or a transmission power ratio notified from the base station.

Specifically, after establishing the call and making synchronization with the downlink network, the transmission rate control function is configured to calculate the radio propagation path quality $L_n$ and the average radio propagation path quality

$$\overline{L}_n,$$

in the following manner.

$$L_n = \frac{1}{P_n}$$

$$\overline{L}_n = \delta_n \overline{L}_{n-1} + (1 - \delta_n) L_n$$

when,

$$\delta_n = \min\left(1 - \frac{1}{n+1}, \delta\right)$$

As described above, the radio propagation path quality $L_n$ is calculated based on the transmission power $P_n$ in the mobile station.

Note that, when a point of time n when the measurement is started in the above-described calculating expression is defined to be equal to 0 (n = 0), it is assumed that the radio propagation path quality $L_n$ and the average radio propagation path quality

$$\overline{L}_n$$

are calculated and updated in a unit of the slot or in the unit of the TTI.

Here, an input forgetting factor $\delta$ may be notified from the network during the establishment of the call, or may be decided in advance by performing optimization.

Moreover, the transmission power $P_n$ may be measured by using an uplink transmission power command, or may be measured by other methods.

When the user data to be transmitted is present in the mobile station, the mobile station calculates the instantaneous transmission rate $R_{tx,n}$ in the n-th slot or the n-th TTI by the following (Formula 1).

Note that, when n is in the unit of the slot, the transmission processing in the TTI is performed at the instantaneous transmission rate $R_{tx,n}$ calculated in the slot n located at the beginning of the TTI.

$$R_{tx,n} = \frac{L_n^{\beta}}{\overline{L_n}^{\alpha}} \cdot C_{R,n} \quad \text{(Formula 1)}$$

However, parameters $\alpha$ and $\beta$ in the (Formula 1) may be notified from the network during the establishment of the call, or may be notified in the cell. Moreover, it is possible to notify the parameters $\alpha$ and $\beta$ in the (Formula 1) by either the base station or the radio control apparatus.

Moreover, in the (Formula 1), $C_{R,n}$ is a factor related to the transmission rate, and is notified from the base station to all the mobile stations under communication.

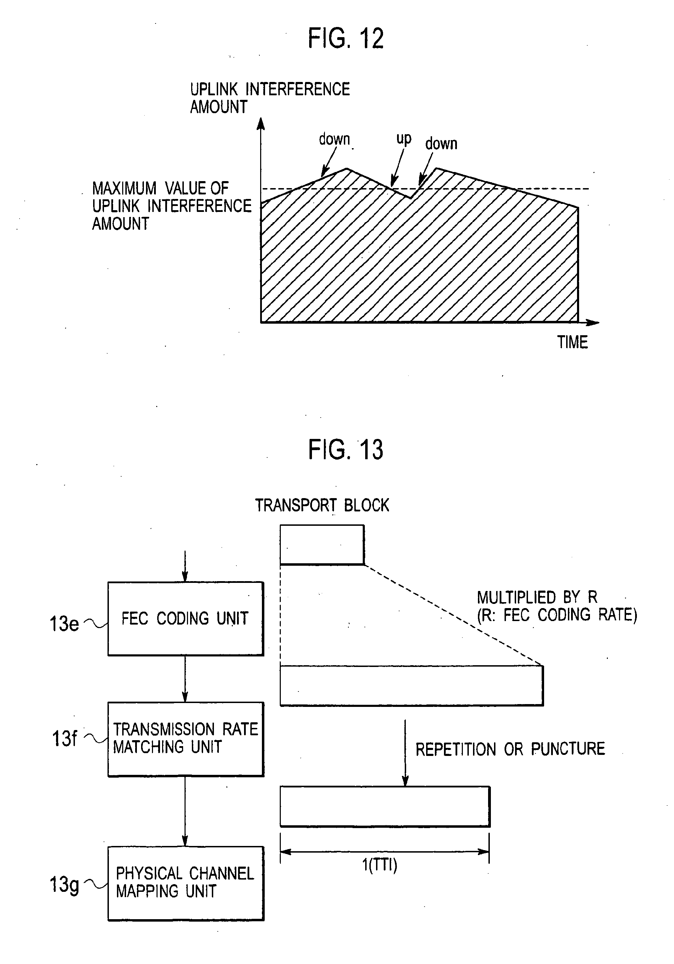

FIG. 12 is a view schematically showing a state of changing (UP/DOWN) $C_{R,n}$ in response to an uplink interference amount (Noise Rise) in the base station.

As understood from the (Formula 1), if the factor $C_{R,n}$ related to the transmission rate is raised, then the instantaneous transmission rate $R_{tx,n}$ is raised, and accordingly, the uplink interference amount is increased.

On the contrary, if the factor $C_{R,n}$ related to the transmission rate is lowered, then the instantaneous transmission rate $R_{tx,n}$ is lowered, and accordingly, the uplink interference amount is decreased.

As described above, the uplink interference amount is approximated to the maximum value (Max Noise Rise) of the uplink interference amount as much as possible, thus making it possible to precisely raise a radio network capacity to a limit thereof in a short cycle.

Specifically, the base station is configured to control the factor related to the transmission rate based on the uplink interference power (uplink interference amount), and to notify the factor related to the transmission rate by the downlink shared channel in the unit of each TTI or in the unit of the plural TTIs.

While there exists the method of directly obtaining the instantaneous transmission rate $R_{tx,n}$ by the calculation as described above, there are also considered methods of indirectly obtaining the instantaneous transmission rate $R_{tx,n}$ by using the transmission power and the transmission power ratio as in the following two examples.

First, in the case of performing the control for the transmission rate by controlling the transmission power, when the transmission power at the n-th transmission time interval is defined as $P_{tx,n}$, the transmission power $P_{tx,n}$ is obtained by

$$P_{tx,n} = \frac{L_n^{\beta}}{\overline{L_n}^{\alpha}} \cdot C_{P,n} .$$

However, $C_{P,n}$ is a factor related to the transmission power, and is changed (UP/DOWN) by the base station in response to the uplink interference amount in a similar way to the factor $C_{R,n}$ related to the transmission rate.

Based on the transmission power $P_{tx,n}$ obtained as described above, the instantaneous transmission rate $R_{tx,n}$ at the n-th transmission time interval is decided.

Second, in the case of performing the control for the transmission rate by controlling the transmission power ratio, when the transmission power ratio at the n-th transmission time interval is defined as $PR_{tx,n}$, the transmission power $PR_{tx,n}$ is obtained by

$$PR_{tx,n} = \frac{L_n^{\beta}}{\overline{L_n}^{\alpha}} \cdot C_{PR,n} .$$

However, $C_{PR,n}$ is a factor related to the transmission power ratio, and is changed (UP/DOWN) by the base station in response to the uplink interference amount in a similar way to the factor $C_{R,n}$ related to the transmission rate.

Based on the transmission power ratio $PR_{tx,n}$ obtained as described above, the instantaneous transmission rate $R_{tx,n}$ at the n-th transmission time interval is decided.

However, here, the transmission power ratio represents a ratio of the dedicated physical control channel (DPCCH) and the enhanced dedicated physical data channel (E-DPDCH) in the uplink network.

In the above two examples, it becomes possible to control the transmission rate, by controlling the transmission power, and it is possible to realize, simply with high precision, a method of controlling the uplink interference amount (interference power).

As shown in FIG. 13, the Layer 1 function unit 130 includes a forward error collection (FEC) coding unit 13e, a transmission rate matching unit 13f, and a physical channel mapping unit 13g.

The FEC coding unit 13e is configured to implement error correction coding processing for the transport block (PDU of Layer 2) transmitted from the MAC-e function unit.

The transmission rate matching unit 13f is configured to implement "Repetition (bit repetition)" and "Puncture (bit thinning)" for the transport block subjected to the error correction coding processing, in order to match the transport block with a transmission capacity of the physical channel.

As described above, according to the present invention, the network notifies the predetermined parameters α and β, and thus a communication carrier can adjust a trade-off between fairness and a throughput of the entire cell based on a viewpoint of serviceability and profitability of a system owned thereby.

For example, in the present invention, (α, β) is set at (0, 0), thus making it possible to perform a completely fair transmission rate control among the mobile stations.

Moreover, in the present invention, (α, β) is set at (1, 1), thus making it possible to reduce the interference from the outside and to enhance the radio network capacity while maintaining the fairness.

Moreover, according to the present invention, it is possible to increase an allocation of the instantaneous transmission rate to a mobile station located in good radio environment by decreasing α or increasing β, so as to increase throughput in the entire cell by sacrificing the fairness.

Furthermore, according to the present invention, it becomes possible to reduce a processing load of the mobile station by using the relatively simple formulas.

Although the description has been made above in detail of the present invention by the embodiment, it is obvious for those skilled in the art that the present invention is not limited to the embodiment described in this application.

The apparatus of the present invention can be embodied as a revised and altered mode without deuniting from the gist and scope of the present invention, which are defined by the description of the scope of claims. Hence, the description of this application is intended to explain the illustration, and has no restrictive meaning for the present invention at all.

<INDUSTRIAL APPLICABILITY>

As described above, according to the present invention, the flexible mobile communication system and mobile station, which are capable of adjusting the trade-off between the fairness and the throughput of the entire cell can be provided by notifying the parameters during the establishment of the call, and so on.

**Claims**

1. A mobile station that controls a transmission rate of user data to be transmitted to a base station, comprising:

a transmission rate control unit configured to decide an instantaneous transmission rate of the user data, based on a parameter notified from a network during establishment of a call, a radio propagation path quality of a radio propagation path between the mobile station and the base station, an average radio propagation path quality of the radio propagation path, a factor related to a transmission rate, a transmission power or a transmission power ratio notified from the base station.

2. The mobile station according to claim 1, wherein when, in an n-th transmission time interval or slot, the radio propagation path quality is defined as $L_n$, the average radio propagation path quality is expressed by

$$\overline{L}_n,$$

the factor related to the transmission rate is defined as $C_{R,n}$, and the parameters corresponding to $L_n$ and

$$\overline{L}_n$$

are defined as α and β, respectively, the transmission rate control unit is configured to decide the instantaneous transmission rate $R_{tx,n}$ of the user data in the n-th transmission time interval or slot by

$$R_{tx,n} = \frac{L_n^{\;\beta}}{\overline{L}_n^{\;\alpha}} \cdot C_{R,n}\;.$$

3. The mobile station according to claim 1, wherein when, in an n-th transmission time interval or slot, the radio propagation path quality is defined as $L_n$, the average radio propagation path quality is expressed by

$$\overline{L}_n,$$

the factor related to the transmission power is defined as $C_{P,n}$, and the parameters corresponding to $L_n$ and

$$\overline{L}_n$$

are defined as α and β, respectively, the transmission rate control unit is configured to decide the transmission power $P_{tx,n}$ in the mobile station in the n-th transmission time interval or slot by

$$P_{tx,n} = \frac{L_n{}^{\beta}}{\overline{L_n}{}^{\alpha}} \cdot C_{P,n} \,,$$

and to decide the instantaneous transmission rate of the user data based on the decided transmission power $P_{tx,n}$.

4. The mobile station according to claim 1, wherein when, in an n-th transmission time interval or slot, the radio propagation path quality is defined as $L_n$, the average radio propagation path quality is expressed by

$$\overline{L}_n \,,$$

the factor related to the transmission power ratio is defined as $C_{PR,n}$, and the parameters corresponding to $L_n$ and

$$\overline{L}_n$$

are defined as $\alpha$ and $\beta$, respectively, the transmission rate control unit is configured to decide the transmission power ratio $PR_{tx,n}$ in the mobile station in the n-th transmission time interval or slot by

$$PR_{tx,n} = \frac{L_n{}^{\beta}}{\overline{L_n}{}^{\alpha}} \cdot C_{PR,n} \,,$$

and to decide the instantaneous transmission rate of the user data based on the decided transmission power ratio $PR_{tx,n}$.

5. The mobile station according to any one of claims 1 to 4, wherein the parameters are notified from a radio control apparatus.

6. The mobile station according to any one of claims 1 to 4, wherein the parameters are notified from the base station.

7. The mobile station according to any one of claims 1 to 6, wherein the radio propagation path quality is calculated based on the transmission power in the mobile station.

8. The mobile station according to claim 7, wherein when the transmission power in the mobile station in the n-th transmission time interval or slot is defined as $P_{tx,n}$, the radio propagation path quality $L_n$ is calculated by

$$L_n = \frac{1}{P_n} \,.$$

9. The mobile station according to any one of claims 1 to 8, wherein the transmission power in the mobile station is measured by using an uplink transmission power command.

10. The mobile station according to any one of claims 1 to 9, wherein, based on a predetermined input forgetting factor $\delta$ or an input forgetting factor $\delta$ notified from the network, and on the radio propagation path quality $L_n$ in the n-th transmission time interval or slot, the average radio propagation path quality expressed by

$$\overline{L}_n$$

is calculated by

$$\delta_n = \min\left(1 - \frac{1}{n+1}, \delta\right)$$

$$\overline{L}_n = \delta_n \overline{L}_{n-1} + (1 - \delta_n) L_n \,.$$

11. A mobile communication system that controls a transmission rate of user data to be transmitted from a mobile station to a base station, wherein the mobile station is configured to decide an instantaneous transmission rate of the user data, based on a parameter notified from a network during establishment of a call, a radio propagation path quality of a radio propagation path between the base station and the mobile station, an average radio propagation path quality of the radio propagation path, and a factor related to a transmission rate, a transmission power or a transmission power ratio notified from the base station.

**12.** The mobile communication system according to claim 11, wherein
the base station is configured to control the factor related to the transmission rate based on uplink interference power, and to notify the factor related to the transmission rate by a downlink shared channel in a unit of each transmission time interval or in a unit of plural transmission time intervals.

## FIG. 1

RADIO CONTROL APPARATUS

TO NETWORK
OF EXCHANGE

BASE STATION

BASE STATION

TO OTHER BASE STATIONS

BASE STATION

BASE STATION

BASE STATION

BASE STATION

# FIG. 2

(a)

DATA SIZE

#1

#2

#1

#2

TIME

▨ DATA OF MOBILE STATION A

☐ DATA OF MOBILE STATION B

(b)

UPLINK RESOURCE

#1   #2

#1   #2

(c)

UPLINK RESOURCE

#1   #2

#1   #2

# FIG. 3

(a)

(b)

DATA SIZE

TIME

#1

#1

#2

#2

UPLINK RESOURCE

#1

#1

#2

#2

DATA OF MOBILE STATION A
DATA OF MOBILE STATION B

# FIG. 4

(a)

(b)

DATA SIZE

TIME

#1

#1

#2

#2

UPLINK RESOURCE

#1

#1

#2

#2

DATA OF MOBILE STATION A
DATA OF MOBILE STATION B

# FIG. 5

TO NETWORK OF EXCHANGE

MOBILE STATION #3

RADIO CONTROL APPARATUS

DEDICATED CHANNEL #3

TO OTHER BASE STATIONS

DEDICATED CHANNEL #1

DEDICATED CHANNEL #2

BASE STATION

MOBILE STATION #1

MOBILE STATION #2

# FIG. 6

TO NETWORK
OF EXCHANGE

MOBILE STATION #3

RADIO CONTROL
APPARATUS

ASSOCIATED DEDICATED
CHANNEL #3

...

DOWNLINK SHARED
CHANNEL

TO OTHER BASE STATIONS

ASSOCIATED DEDICATED
CHANNEL #1

ASSOCIATED DEDICATED
CHANNEL #2

BASE STATION

DOWNLINK SHARED
CHANNEL

DOWNLINK SHARED
CHANNEL

MOBILE
STATION #1

MOBILE STATION #2

## FIG. 7

| HSDPCCH | HARQ-ACK | CQI |
|---|---|---|

| DPDCH#1 | USER DATA |
|---|---|

.
.
.

| DPDCH#6 (UP to #6) | USER DATA |
|---|---|

| DPCCH | PILOT SYMBOL | TFCI | FBI | TPC |
|---|---|---|---|---|

| SLOT #0 | SLOT #1 | · · · | SLOT #n |

1 [TTI]

## FIG. 8

ANTENNA

10

RADIO COMMUNICATION FUNCTION UNIT

TO OTHER FUNCTION UNITS

11
BUS INTERFACE UNIT

12
CALL PROCESSING CONTROL UNIT

13
BASEBAND SIGNAL PROCESSING UNIT

14
TRANSMISSION/ RECEPTION UNIT

15

# FIG. 9

UPPER-LEVEL LAYER FUNCTION UNIT — 13a

BASEBAND SIGNAL PROCESSING UNIT — 13

RLC FUNCTION UNIT — 13b

MAC-d FUNCTION UNIT — 13c

MAC-e FUNCTION UNIT — 13d

LAYER 1 FUNCTION UNIT — 130

FEC CODING UNIT — 13e

TRANSMISSION RATE MATCHING UNIT — 13f

PHYSICAL CHANNEL MAPPING UNIT — 13g

# FIG. 10

UPPER-LEVEL LAYER
FUNCTION UNIT                    ~13a

APPLICATION DATA
(RLC SDU)

. . .

RLC FUNCTION UNIT               ~13b

RLC PDU

LOGICAL CHANNEL

13c

. . .

MAC-d FUNCTION UNIT             RLC HEADER

MAC-d PDU

MAC-d FLOW

13d

. . .

MAC-e FUNCTION UNIT             MAC-d HEADER

TRANSPORT BLOCK

TRANSPORT
CHANNEL

130

LAYER 1 FUNCTION
UNIT                           MAC-e HEADER

# FIG. 11

# FIG. 12

UPLINK INTERFERENCE
AMOUNT

down    up    down

MAXIMUM VALUE OF
UPLINK INTERFERENCE
AMOUNT

TIME

# FIG. 13

TRANSPORT BLOCK

13e ~ FEC CODING UNIT

MULTIPLIED BY R
(R: FEC CODING RATE)

13f ~ TRANSMISSION RATE
MATCHING UNIT

REPETITION OR PUNCTURE

13g ~ PHYSICAL CHANNEL
MAPPING UNIT

1(TTI)

<table>
<tr><td colspan="2" align="center">**INTERNATIONAL SEARCH REPORT**</td><td colspan="2">International application No.<br>PCT/JP2005/014736</td></tr>
</table>

**A. CLASSIFICATION OF SUBJECT MATTER**
*H04Q7/38* (2006.01)

According to International Patent Classification (IPC) or to both national classification and IPC

**B. FIELDS SEARCHED**

Minimum documentation searched (classification system followed by classification symbols)
*H04Q7/38* (2006.01)

Documentation searched other than minimum documentation to the extent that such documents are included in the fields searched
Jitsuyo Shinan Koho          1922-1996     Jitsuyo Shinan Toroku Koho     1996-2005
Kokai Jitsuyo Shinan Koho     1971-2005     Toroku Jitsuyo Shinan Koho     1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2004-147275 A (Matsushita Electric Industrial Co., Ltd.), 20 May, 2004 (20.05.04), Full text; all drawings & WO 2004/021651 A1 & EP 1443719 A1 & AU 2003254885 A1 & US 2004/258070 A1 | 1-12 |
| A | JP 2004-140604 A (NTT Docomo Inc.), 13 May, 2004 (13.05.04), Full text; all drawings & EP 1411685 A2 & US 2004/082364 A1 & CN 1498001 A & KR 2004034514 A | 1-12 |
| P,A | JP 2004-312190 A (NTT Docomo Inc.), 04 November, 2004 (04.11.04), Full text; all drawings (Family: none) | 1-12 |

☐ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 November, 2005 (08.11.05) | 22 November, 2005 (22.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)